# EUROPEAN PATENT SPECIFICATION

(11) **EP 3 648 015 B1**
(45) Date of publication and mention of the grant of the patent: **03.01.2024**
(21) Application number: 19204740.5
(22) Date of filing: 23.10.2019
(51) Int. Cl.: G06N 3/045, G06N 3/047, G06N 3/088

(54) **A METHOD FOR TRAINING A NEURAL NETWORK**
VERFAHREN ZUM TRAINIEREN EINES NEURONALEN NETZWERKS
PROCÉDÉ DE FORMATION D'UN RÉSEAU NEURONAL

(30) Priority: 05.11.2018 FI 20185936
(43) Date of publication of application: 06.05.2020
(73) Proprietor: Nokia Technologies Oy, 02610 Espoo (FI)
(72) Inventor: AYTEKIN, Caglar, 33580 Tampere (FI); CRICRI, Francesco, 33100 Tampere (FI)
(74) Representative: Berggren Oy

(56) References cited:
- CLEMENT FUNG ET AL: "Mitigating Sybils in Federated Learning Poisoning", ARXIV.ORG, CORNELL UNIVERSITY LIBRARY, 201 OLIN LIBRARY CORNELL UNIVERSITY ITHACA, NY 14853, 14 August 2018 (2018-08-14), XP080896917,
- H. Brendan Mcmahan ET AL: "Communication-Efficient Learning of Deep Networks from Decentralized Data", , 28 February 2017 (2017-02-28), pages 1-11, XP055538798, Retrieved from the Internet: URL:https://arxiv.org/pdf/1602.05629.pdf [retrieved on 2019-01-07]
- NICK HYNES ET AL: "Efficient Deep Learning on Multi-Source Private Data", ARXIV.ORG, CORNELL UNIVERSITY LIBRARY, 201 OLIN LIBRARY CORNELL UNIVERSITY ITHACA, NY 14853, 18 July 2018 (2018-07-18), XP081249732,

## Description

### Technical field

Various example embodiments relate to an apparatus and a method for training a neural network and defending against adversarial attacks.

### Background

Neural networks are being utilized in an ever increasing number of applications for many different types of device, such as mobile phones and various internet of things (IoT) devices. Neural networks may be used to e.g. image and video analysis and processing, social media data analysis and device usage data analysis.

Neural networks and other machine learning tools may be trained to learn properties from input data. In federated training, training of a neural network is distributed to several devices. The devices collaboratively train a model and share the parameter updates of their individual models to each other. There may, however, exist agents or operators that may attack a federated training system thus endangering privacy of the training devices. Thus, neural networks in federated training may be vulnerable to adversarial attacks.

There is, therefore, a need for a solution that enables neural networks to defend against adversarial attacks.

"Mitigating Sybils in Federated Learning Poisoning" by C. Fung et al., Cornell University Library, 14 August 2018, discloses how the vulnerability of federated learning to sybil-based poisoning attacks may be addressed by defense mechanism that identifies poisoning sybils based on the diversity of client updates in the distributed learning process. The method is based on monitoring the similarity of the gradients submitted by each client after each training loop, wherein a client repeatedly providing too similar gradients may be a suspected attacker, and its weight in the federated learning is gradually reduced.

### Summary

Now there has been invented an improved method and technical equipment implementing the method, by which the above problems are alleviated. Various aspects of the invention include a method and an apparatus which are characterized by what is stated in the independent claims. Various example embodiments are disclosed in the dependent claims.

### Description of the Drawings

In the following, various example embodiments will be described in more detail with reference to the appended drawings, in which
Fig. 1 shows, by way of example, a system and devices for federated training of neural network(s);
Fig. 2 shows, by way of example, a block diagram of an apparatus for federated training;
Fig. 3 shows, by way of example, a flowchart of a non-claimed method for defending against an adversarial attack;
Fig. 4a shows an embodiment of a training process of a training device according to the invention;
Fig. 4b shows, by way of example, a non-claimed training process of a training device;
Fig. 5 shows, by way of example, a non-claimed federated training process; and
Fig. 6 shows, by way of example, a flowchart of a non-claimed method for defending against an adversarial attack.
Fig. 7 shows, by way of example, a flowchart of a non-claimed method for defending against an adversarial attack.

### Drawings are schematic.

### Description of Example Embodiments

A neural network (NN) is a computation graph comprising several layers of computation. Each layer comprises one or more units, where each unit performs an elementary computation. A unit is connected to one or more other units, and the connection may have associated a weight. The weight may be used for scaling a signal passing through the associated connection. Weights may be learnable parameters, i.e., values which may be learned from training data. There may be other learnable parameters, such as those of batchnormalization layers.

Two of the most widely used architectures for neural networks are feed-forward and recurrent architectures. Feed-forward neural networks are such that there is no feedback loop: each layer takes input from one or more of the layers before and provides its output as the input for one or more of the subsequent layers. Also, units inside certain layers take input from units in one or more of preceding layers, and provide output to one or more of following layers.

Initial layers, i.e. the layers close to the input data, extract semantically lowlevel features such as edges and textures in images, and intermediate and final layers extract more high-level features. After the feature extraction layers there may be one or more layers performing a certain task, such as classification, semantic segmentation, object detection, denoising, style transfer, super-resolution, etc. In recurrent neural nets, there is a feedback loop, so that the network becomes stateful, i.e., it is able to memorize information or a state.

The neural networks may be trained to learn properties from input data, either in supervised way or in unsupervised way. Such learning is a result of a training algorithm, or of a meta-level neural network providing a training signal. The training algorithm changes some properties of the neural network so that its output is as close as possible to a desired output. For classification of objects in images, the output of the neural network can be used to derive a class or category index which indicates the class or category that the object in the input image belongs to. Examples of classes or categories may be e.g. "person", "cat", "dog", "building", "sky".

Training usually happens by changing the learnable parameters so as to minimize or decrease the output's error, also referred to as the loss. The loss may be e.g. a mean squared error or cross-entropy. In recent deep learning techniques, training is an iterative process, where at each iteration the algorithm modifies the weights of the neural net to make a gradual improvement of the network's output, i.e., to gradually decrease the loss.

In this description, we may use the terms "model", "neural network", "neural net" and "network" interchangeably, and also the weights of neural networks may be referred to as learnable parameters or simply as parameters.

Training a neural network is an optimization process, but the final goal is different from the typical goal of optimization. In optimization, the only goal is to minimize a functional. In machine learning, the goal of the optimization or training process is to make the model learn the properties of the data distribution from a limited training dataset. In other words, the goal is to learn to use a limited training dataset in order to learn to generalize to previously unseen data, i.e., data which was not used for training the model. This is usually referred to as generalization.

In practice, data is usually split into at least two sets, the training set and the validation set. The training set is used for training the network, i.e., to modify its learnable parameters, i.e. weights, in order to minimize the loss. The validation set is used for checking the performance of the network on data which was not used to minimize the loss, as an indication of the final performance of the model. The errors on the training set and on the validation set are monitored during the training process to understand the following things:
- If the network is learning at all - in this case, the training set error should decrease, otherwise the model is in the regime of underfitting.
- If the network is learning to generalize - in this case, also the validation set error needs to decrease and to be not too much higher than the training set error. If the training set error is low, but the validation set error is much higher than the training set error, or it does not decrease, or it even increases, the model is in the regime of overfitting. This means that the model has just memorized the training set's properties and performs well only on that set, but performs poorly on a set not used for tuning its parameters.

In federated training, the training of a neural network is distributed to several devices. A shared global model is trained from a federation of several devices. A central server may coordinate the training and/or may be responsible for initialization. One example is to provide separate datasets to separate devices and let the devices train the models that they have at that moment until a stopping criterion is met. The dataset may be with or without labels depending on whether the training is supervised or unsupervised. The stopping criterion may be based on e.g. the number of epochs or a time determined by the central server or validation loss values.

There may exist agents or operators that may attack a federated training system thus endangering privacy of the training devices. Thus, neural networks in federated training may be vulnerable to adversarial attacks. Several example embodiments are described in the context of federated training of neural networks for classification of images. It is to be noted -that the invention is limited to image classification. In principle however, although not claimed, the different embodiments have applications in any environment where federated training of neural networks for classification of data, e.g. image, video, audio and/or text, is required.

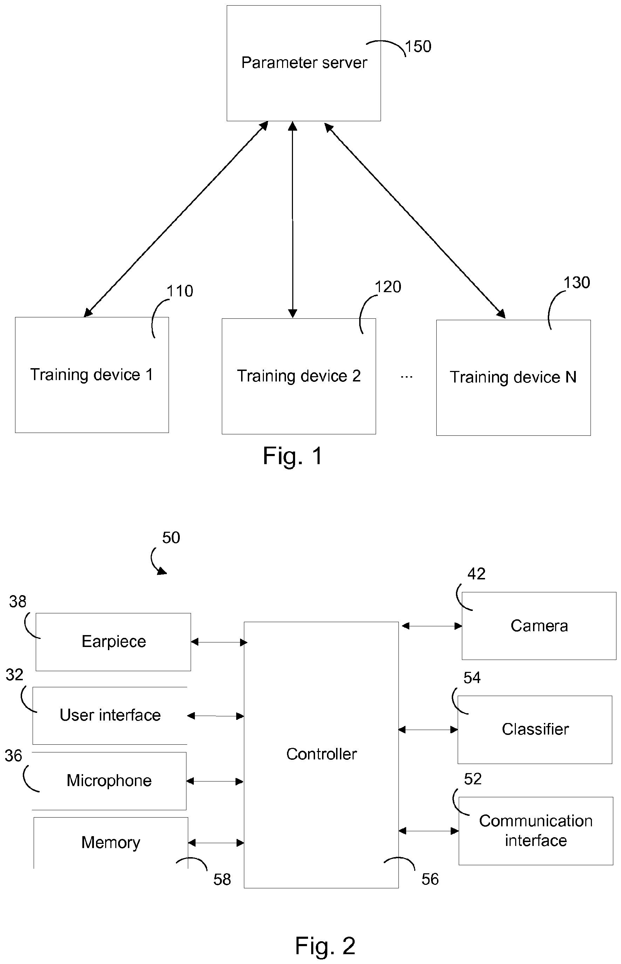

Fig. 1 shows, by way of example, a system and devices for federated training of neural network(s). The system may comprise a central server, i.e. a parameter server 150. The system may comprise a federation of training devices 110, 120, 130, i.e. training device 1, training device 2...and training device N. The training devices comprise at least one neural network. The neural networks in the training devices may have the same structure. The training devices may be e.g. cell phones, such as smart phones.

The training devices perform training as part of a federated training scenario.

Data may be different from device to device. The training devices may be able to capture their own data, or they may receive the data from the memory of the training device or from an external entity, e.g. server 150 or another database or server. Data may be e.g. image data captured by the training device itself using a camera of the training device. Optionally although not claimed, data may be any data, such as video, audio, text etc.

The training devices contribute to training a certain neural network or other machine learning system. For example, the network to be trained may be a classifier neural network, such as a Convolutional Neural Network (CNN) capable of classifying objects or scenes in input images. The classifier classifies input images into one of a plurality of classes. The classes may be given an index, e.g. 'a', 'b', 'c', 'd', 'e', etc. or '1', '2', '3', '4', '5', etc. Each class may represent a category, e.g. "cat", "dog", "sky", "person", etc. The training devices need not necessarily know what category is represented by each class. It is enough for the training devices to deal with the indices. Output of the classifier neural network may be a vector of probabilities that the input represents a particular class associated with a particular index of the vector.

Each training device may be responsible for training at least one class or at least a subset of classes. One training device may be responsible for training e.g. one class, two classes, three classes, etc. or all classes. There may be more than one training device responsible for a given class, i.e. the classes may overlap between the training devices. For example, class 'a' may be trained by e.g. one device, by two devices, by three devices, etc. or by all devices.

Communication between the server and the devices may comprise receiving and transmitting parameters. The parameters may comprise e.g. weights and/or gradients. For example, the training devices may receive weights and/or gradients, perform the training using their own models, calculate the updated weights and/or gradients, and transmit the updated weights and/or gradients to the server. Alternatively or in addition, the updated weights and/or gradients may be sent directly to the other training devices. The gradient update schedule may be pre-defined and controlled by one of several parameters.

Fig. 2 shows, by way of example, a block diagram of an apparatus for federated training. The apparatus or an electronic device 50 may be the training device. The electronic device 50 may be, for example, a mobile terminal or user equipment of a wireless communication system. However, it would be appreciated that embodiments as disclosed herein may be implemented within any electronic devices or apparatuses which may require classification of images, such as self-driving cars, camera connected smart home devices, video and teleconference devices, smart watches and/or other camera connected internet of things (IoT) devices.

The apparatus 50 may comprise a user interface 32. The user interface may comprise a display in the form of a liquid crystal display or any suitable display technology suitable to display an image or video. The apparatus 50 may further comprise a keypad. Any suitable data or user interface mechanism may be employed. For example the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device, e.g. an earpiece 38, speaker, or an analogue audio or digital audio output connection. The apparatus 50 may also comprise a battery, a wired power interface, or the device may be powered by any suitable mobile energy device such as solar cell, fuel cell or clockwork generator. The apparatus may further comprise a camera 42 capable of recording or capturing images and/or video. The apparatus 50 may further comprise an infrared port for short range line of sight communication to other devices. The apparatus 50 may further comprise any suitable short range communication solution such as for example a Bluetooth wireless connection or a USB/firewire wired connection.

The apparatus 50 may comprise a controller 56, processor or processor circuitry for controlling the apparatus 50. The controller 56 may be connected to memory 58 which may store both data, for example in the form of image, video and audio data, and/or may also store instructions for implementation on the controller 56. The controller 56 may further be connected to classifier circuitry 54 suitable for carrying out classification of image or other data or assisting in classification carried out by the controller.

The apparatus 50 may further comprise a card reader and a smart card, for example a UICC and UICC reader for providing user information and being suitable for providing authentication information for authentication and authorization of the user at a network.

The apparatus 50 may comprise communication interface 52 connected to the controller and suitable for generating wireless communication signals for example for communication with a cellular communications network, a wireless communications system or a wireless local area network. The apparatus 50 may further comprise an antenna connected to the communication interface 52 for transmitting radio frequency signals to other apparatus(es) and/or for receiving radio frequency signals from other apparatus(es).

The apparatus 50 may comprise a camera 42 capable of recording or detecting individual frames which are then passed to the classifier 54 or the controller for processing. The apparatus may receive the image data for processing from another device prior to transmission and/or storage. The apparatus 50 may also receive either wirelessly or by a wired connection the image for classification. The structural elements of apparatus 50 described above represent examples of means for performing a corresponding function.

The apparatus 50 may comprise means such as circuitry and electronics for handling, receiving and transmitting data. The apparatus may comprise a memory 58 for storing data and computer program code which can be executed by a controller 56 to carry out various embodiment of the method as disclosed herein. The elements of the method may be implemented as a software component residing in the apparatus or distributed across several apparatuses. Controller 56 may include processor circuitry. The computer program code may be embodied on a non-transitory computer readable medium.

As used in this application, the term "circuitry" may refer to one or more or all of the following: (a) hardware-only circuit implementations (such as implementations in only analog and/or digital circuitry) and (b) combinations of hardware circuits and software, such as (as applicable):
(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Federated training is susceptible to adversarial attacks in many ways. In federated training, there is a collaborative learning framework with agreed structure of neural network and agreed label set, i.e. the class types are pre-defined. Referring back to Fig. 1, let us assume that the training device 110 is a victim user that is attacked. In this example, the victim is responsible for training classes 'a' and 'b'. Let us assume that the training device 120 is an adversary, i.e. the attacker. The attacker is responsible for training the classes 'b' and 'c'. It is to be noted that the classes 'a', 'b', and 'c' here are only examples. The attacker may choose any class it wants to compromise. The attacker does not have information on the chosen class, i.e. the chosen class is one of the classes the training of which is responsibility of the other training devices.

Thus, the attacker does not have any information about the class 'a'. The goal of the attacker 120 is to effectively steal data belonging to class 'a' from the victim 110 by training a generator that is able to generate such data. The attacker comprises or has an access to a Generative Adversarial Network (GAN) which may be employed to generate replicas of the samples belonging to class 'a'. GANs may generate these synthetic, i.e. fake, samples that look similar to the samples belonging to class 'a' without having access to the original samples. The GAN employs a discriminative deep learning network, i.e. a discriminator, and a generative deep learning network, i.e. a generator. The discriminator is trained to discriminate between real and unreal images, i.e. between the original samples and the generated samples. The generator may be concatenated with a classifier and end-to-end trained to generate samples that maximize the classifier's output probability for class 'a'.

Before the actual attack, collaborative training is carried out to achieve a certain level of performance. The victim may download parameters from the central server, i.e. the parameter server, update the local model and perform training for classes 'a' and 'b'. Then, the victim may upload the updated parameters to the parameter server. In addition to the victim, other training devices also perform the local training using downloaded parameters and eventually upload the updated parameters to the server.

The attacker may download, from the parameter server, the updated parameters, and update the local model of the attacker. The updated parameters that the attacker downloads from the server may be uploaded to the server by the victim and other training devices. The attacker then trains the local GAN to generate samples of class 'a'.

The attacker may generate synthetic samples of class 'a', label the synthetic samples as class 'c' and train the local model for class 'c' using the synthetic samples. Then, the attacker may upload the updated parameters to the parameter server. As a result of injecting updated parameters obtained from adversarial training into the distributed learning procedure, the classifier will misclassify samples from class 'a' as class 'c'. This will cause the victim to do more work and learn more representative features from class 'a', in order to compensate for the adversarial weight updates from the attacker. The victim will reveal more information about class 'a' than initially intended. This will eventually enable the attacker to generate even better images for the class 'a', i.e. to replicate victim's data with even higher accuracy. This poses a data theft and a copyright issue and endangers privacy of the victim apparatus and of the user of the victim apparatus.

To defend the attack, a defense strategy is provided to be used by the training devices. The defense is a precautionary defense against an attack in order to preserve privacy in federated training. After first downloading the possibly adversarial parameters from the server, and then performing local training and updating the parameters, the training device may internally simulate an attack and check whether such attack would be harmful for the training device or not. If the attack would not be harmful, the updated parameters may be sent to the parameter server and/or to the other training devices. If the attack would be harmful, the parameters may be modified. The simulation may be repeated with the modified parameters until a stopping criterion is met, e.g. until a certain amount of accuracy increase of the local model is satisfied.

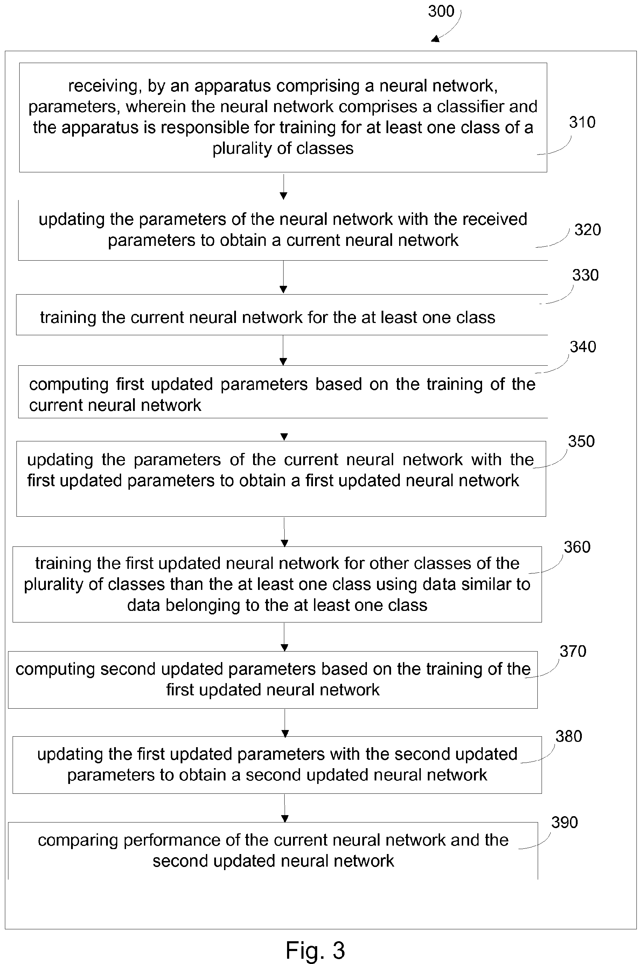

Fig. 3 shows, by way of example, a flowchart of a method 300 for defending against an adversarial attack. The method 300 may be performed by a training device 410. The method 300 comprises receiving 310, by an apparatus comprising a neural network, parameters, wherein the neural network comprises a classifier and the apparatus is responsible for training for at least one class of a plurality of classes. The method 300 comprises updating 320 the parameters of the neural network with the received parameters to obtain a current neural network. The method 300 comprises training 330 the current neural network for the at least one class; computing 340 first updated parameters based on the training of the current neural network. The method 300 comprises updating 350 the parameters of the current neural network with the first updated parameters to obtain a first updated neural network. The method 300 comprises training 360 the first updated neural network for other classes of the plurality of classes than the at least one class using data similar to data belonging to the at least one class. The method 300 comprises computing 370 second updated parameters based on the training of the first updated neural network. The method 300 comprises updating 380 the first updated parameters with the second updated parameters to obtain a second updated neural network. The method 300 comprises comparing 390 performance of the current neural network and the second updated neural network.

The method is useful in defending against adversarial attacks that try to steal or illegally copy data from a device being part of federated training of a neural network. The method is beneficial in preserving privacy of the device and the user of the device being part of federated training of a neural network.

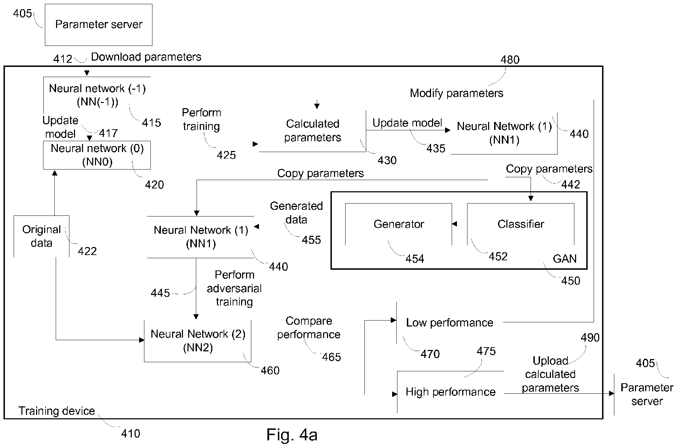

Fig. 4a shows, by way of example, training process of a training device. The training device 410 is an apparatus comprising at least one neural network NN(-1) 415. The training device 410 is part of federated training of a neural network. The at least one neural network comprises a classifier that may be used to classify objects in input images into different categories. The training device 410 is responsible for training for at least one class of a plurality of classes. The training device 410 may receive 412 parameters e.g. by downloading them from a parameter server 405. The parameters comprise e.g. weights and/or gradients.

The NN0 420, which is a current neural network obtained by updating 417 the NN(-1) with the received parameters, may be locally trained 425 for the at least one class the device 410 is responsible of using original data 422, i.e. first data. The original data may be data captured by the training device itself. The original data may comprise images belonging to those class(es) or a subset of classes that the training device is responsible of. The original data 422 may be received from the memory of the training device or from an external entity, e.g. a database or a server. The training device may compute or calculate 430 first updated parameters based on the training of the NN0. The parameters of the NN0 may be updated 435 with the first updated parameters to obtain a first updated neural network NN1 440.

In conventional federated training, the training device 410 would, after calculating the first updated parameters, send them to the parameter server to be shared with the other training devices. According to the method disclosed herein, however, the training device simulates an attack internally and checks whether such attack would be harmful for the training device or not before sending the first updated parameters to the parameter server. The simulated attack is described below.

Data that is similar to data belonging to the at least one class the device 410 is responsible of may be used to adversarially train the NN1 440 for other classes of the plurality of classes other than the at least one class the device 410 is responsible of. The training device 410 may comprise or have access to a GAN that is capable of generating data that looks like real data. The device 410 may train a GAN 450 to generate data similar to the data belonging to the at least one class the device 410 is responsible of. The GAN may comprise a classifier 452 and a generator 454. The first updated parameters may be copied 442 to be used by the classifier 452. The classifier 452 may be the classifier that is being trained from a federation of several devices. The generator may be concatenated with a classifier and end-to-end trained to generate samples that maximize the classifier's output probability for the class the device 410 is responsible of. Additionally, a discriminator may be used in data generation as part of the GAN 450. The generator may be trained to generate as realistic samples, e.g. images, as possible by trying to maximally fool a discriminator that is trained to discriminate between real and unreal samples, e.g. images.

The training device 410 may train a plurality of generators in order to account for many type of generators used by a possible attacker. The plurality of generators may comprise different architecture, such as number and type of layers, number and type of computational units per layer etc., and/or the plurality of generators may use e.g. different training hyper-parameters. The generated data 455 generated by the generator 454 may be used to adversarially train the NN1 440 for other classes of the plurality of classes than the at least one class the device 410 is responsible of. Thus, if the training device is responsible for class 'a', the NN1 may be trained on the classes 'b', 'c', 'd', etc. This adversarial training 445 may be called fake training. Second updated parameters are computed based on the adversarial training. The first updated parameters of the first updated neural network NN1 440 may be updated with the second updated parameters to obtain a second updated neural network NN2 460.

In case a plurality of generators are used to generate a plurality of generated datasets, the adversarial training may be performed using these different datasets.

The performance of the current neural network NN0 and the second updated neural network NN2 are compared 465. The original data may be used in comparison. For example, the classification accuracy may be compared by checking if the NN2 misclassifies samples e.g. from class 'a' as class 'c' or other wrong class more than NN0. In addition or as an alternative to the classification accuracy, other measures of performance may be compared. For example, the confidence or probability for given class may be compared between NN2 and NN0. By comparing the performance of the current neural network NN0 and the second updated neural network NN2 it is possible to check how the downloaded parameters affect the neural network, i.e. check whether the effect of the parameter updates is harmful or not.

If the result of comparison shows high performance 475, i.e. if the performance of the NN2 has not decreased or has increased when compared to the NN0, the calculated parameters are uploaded 490 to the parameter server 405, and/or to the other training devices. The performance here may be e.g. the classification performance for the classes that are responsibility of the device 410. If the result of comparison shows low performance 470, i.e. if the performance of the NN2 has decreased when compared to the NN0, the calculated parameters are modified 480. The parameter server 405 may be informed of an attack by sending a signal indicating an attack.

Modifying the parameters comprises e.g. modifying the calculated weights and/or gradients. The modification comprises e.g. clipping the gradients and/or shrinking the weights.

Shrinking, or suppressing, means modification of the weights. The updates may be made a fraction of the original update. For example, the original update may be multiplied by a factor, e.g. 0.1, 0.2, 0.3, 0.4, 0.5, 0.6, 0.7, 0.8, 0.9. Multiplying by 1 means that no shrinking is made. It may be started with a high fraction, e.g. multiplying by 0.9. If this does not satisfy the high performance requirement then the multiplying factor may be gradually decreased. For example, the original update may be then multiplied by 0.85, then by 0.8, and so on. Shrinking is a linear trimming method.

Clipping means that the gradients that are higher than a pre-defined threshold are set to the pre-defined threshold. If the threshold is set to a positive value T, any value exceeding T or being less than -T are clipped to T and -T, respectively. For example, if a gradient update is 1.5 and the threshold is 1, that gradient update is set to 1. If a gradient update is -1.5, it will map to -1. Clipping is a nonlinear trimming method. As with shrinking, it may be started with a high threshold and decrease it gradually until the high performance requirement is achieved.

After the modifying, the simulated attack and the comparison may be reperformed with the modified parameters in order to verify that the modified parameter does not make the neural network and the training device more vulnerable to adversarial attacks.

A compromise may be found between protection from adversary attacks and model performance by re-performing the attack simulation with the modified parameters and checking the performance until a pre-defined level of performance of the second updated neural network is achieved. For example, the re-modified parameters that cause the model performance to be maximum may be selected to be uploaded 490 to the parameter server 405, and/or to the other training devices.

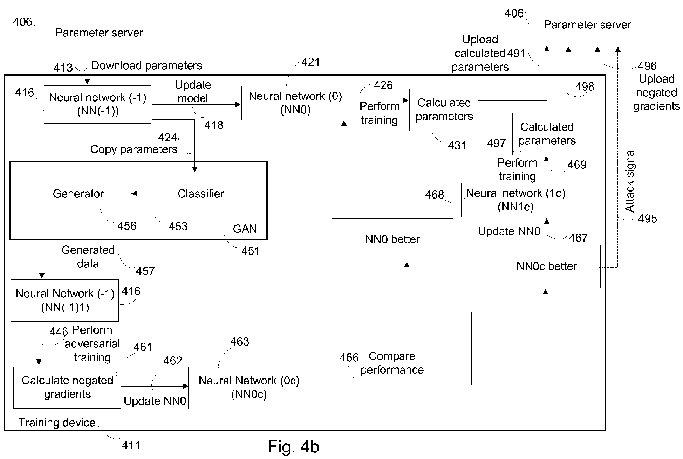

Fig. 4b shows, by way of example, a training process of a training device. The training device 411 is an apparatus comprising at least one neural network NN(-1) 416. The training device 411 is part of federated training of a neural network. The at least one neural network may be or may comprise a classifier that may be used to classify objects in input images into different categories. The training device 411 is responsible for training for at least one class of a plurality of classes. The training device 411 may receive 413 parameters e.g. by downloading them from a parameter server 406. The parameters comprise e.g. weights and/or gradients. The neural network NN(-1) may be updated 418 with the received parameters to obtain a current neural network NN0 421.

It is assumed here that an attacker comprises the same neural network NN(-1) classifier as the training device 411 and that the attack is performed by using NN(-1). The attack may be internally simulated to be able to detect the attack. In addition, a correcting action may be applied to defend against the attack. The simulated attack is described below.

Data that is similar to data belonging to the at least one class the device 411 is responsible of may be used to adversarially train the NN(-1) 416 for other classes of the plurality of classes other than the at least one class the device 411 is responsible of. The training device 411 may comprise or have access to a GAN that is capable of generating data that looks like real data. The device 411 may train a GAN 451 to generate data similar to the data belonging to the at least one class the device 411 is responsible of. The GAN may comprise a classifier 453 and a generator 456. The received parameters may be copied 424 to be used by the classifier 453. The classifier 453 may be the classifier that is being trained from a federation of several devices. The generator may be concatenated with a classifier and end-to-end trained to generate samples that maximize the classifier's output probability for the class the device 411 is responsible of. Additionally, a discriminator may be used in data generation as part of the GAN 451. The generator may be trained to generate as realistic samples, e.g. images, as possible by trying to maximally fool a discriminator that is trained to discriminate between real and unreal samples, e.g. images.

The training device 411 may train a plurality of generators in order to account for many type of generators used by a possible attacker. The plurality of generators may comprise different architecture, such as number and type of layers, number and type of computational units per layer etc., and/or the plurality of generators may use e.g. different training hyper-parameters.

The generated data 457 generated by the generator 456 may be used to adversarially train the NN(-1) 416 for other classes of the plurality of classes than the at least one class the device 411 is responsible of. Thus, if the training device is responsible for class 'a', the NN(-1) may be trained on the classes 'b', 'c', 'd', etc. This adversarial training 446 may be called fake training. Third updated parameters, e.g. gradients, are computed based on the adversarial training. Then, negative of the computed parameters, e.g. gradients, is computed 461. The negative here means the additive inverse, i.e. if the gradient is x, the negative of the gradient is -x. The parameters of the current neural network NN0 421 may be updated 462 with the negative of the third updated parameters to obtain a corrected neural network NN0c 463.

In case a plurality of generators are used to generate a plurality of generated datasets, the adversarial training may be performed using these different datasets. For the plurality of generator types and for all classes other than the at least one class the device 411 is responsible of a negative gradient may be obtained, and it may be applied to the current neural network.

The performance of the current neural network NN0 421 and the corrected neural network NN0c 463 may be compared 466. For example, the classification accuracy may be compared by checking which of these two networks performs better in classification of samples. The samples may be from the original data that the device 411 has stored in the memory and/or has captured itself. In addition or as an alternative to the classification accuracy, other measures of performance may be compared. For example, the confidence or probability for given class may be compared between NN0 and NN0c. By comparing the performance of the current neural network NN0 and the corrected neural network NN0c it is possible to detect an attack.

If the result of comparison shows that the NN0 performs better than the NN0c, then it may be deduced that there is no attack. The NN0 421 may be locally trained 426 for the at least one class the device 411 is responsible of using original data. The original data may be data captured by the training device itself. The original data may comprise images belonging to those class(es) or a subset of classes that the training device is responsible of. The original data may be received from the memory of the training device or from an external entity, e.g. a database or a server. The training device may compute or calculate 431 first updated parameters based on the training of the NN0 421. The parameters of the NN0 421 may be updated with the first updated parameters to obtain a first updated neural network NN1. The training device 411 may, after calculating the first updated parameters, send 491 them to the parameter server to be shared with the other training devices.

If the result of comparison shows that the NN0c performs better than the NN0, an attack is detected. In response to detecting the attack, the training device 411 may transmit 495 a signal indicating an attack to the parameter server 406. The negative of the third updated parameters may be sent 496 to the parameter server 406 or to one or more devices being part of federated training. Uploading the negative of the third updated parameters to the training process may correct the attacker's actions. The NN0 may be updated 467 with the negated gradients to obtain a corrected updated network NN1c 468. The NN1c may be locally trained 469 and the updated parameters 497 computed based on the training may be uploaded 498 to the parameter server 406 or to one or more devices being part of federated training.

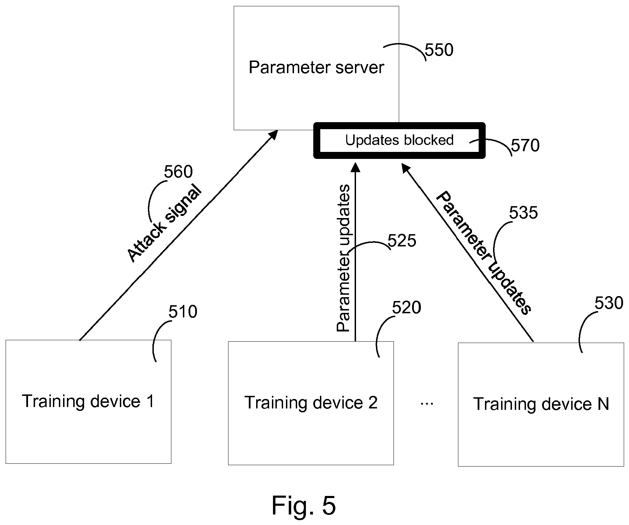

Fig. 5 shows, by way of example, a federated training process. A parameter server 550 may receive parameter updates 525, 535 from one or more apparatuses comprising a neural network, e.g. the training devices 510, 520, 530. The neural network may be a classifier and the training devices may be responsible for training at least one class of a plurality of classes.

The training device 510 may be a victim apparatus, wherein an attack is detected as described earlier in the context of Fig. 4b. Let us assume that the training device 530 is an attacker. The training device 510 may transmit a signal indicating an attack, i.e. an attack signal 560, to the parameter server 550. In response to receiving the attack signal 560 from the training device 510, the parameter server 550 may block 570 the parameter updates from other training devices 520, 530, i.e. other training devices than the victim apparatus. The blocking may be performed alternately, one at a time. During blockage of the parameter updates from the training device 530, the training device 510 may detect that there is no attack anymore. Then, the training device 510 may interrupt, i.e. stop sending the attack signal to the parameter server. When the parameter server detects an interruption in transmission of the attack signal 560 in response to blocking parameter updates from the training device 530, the parameter server may identify, based on the detected interruption, the training device 530 as the attacker. In response to the identification of the attacker, the identified attacker may be banned from federated training.

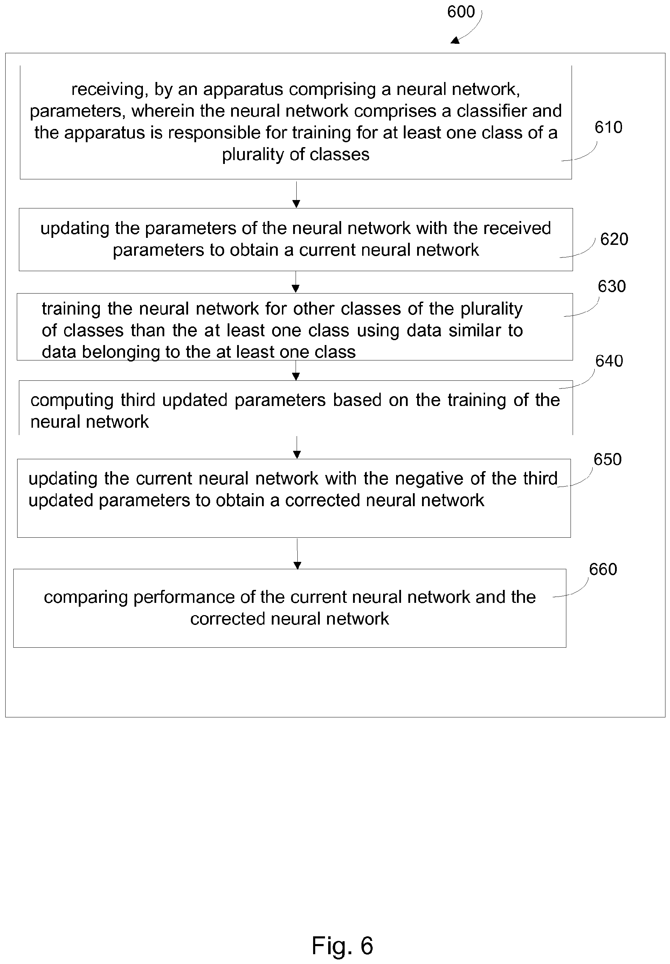

Fig. 6 shows, by way of example, a flowchart of a method 600 for defending against an adversarial attack. The method 600 may be performed by the training device 411. The method 600 comprises receiving 610, by an apparatus comprising a neural network, parameters, wherein the neural network comprises a classifier and the apparatus is responsible for training for at least one class of a plurality of classes. The method 600 comprises updating 620 the parameters of the neural network with the received parameters to obtain a current neural network. The method 600 comprises training 630 the neural network for other classes of the plurality of classes than the at least one class using data similar to data belonging to the at least one class. The method 600 comprises computing 640 third updated parameters based on the training of the neural network. The method 600 comprises updating 650 the current neural network with the negative of the third updated parameters to obtain a corrected neural network. The method 600 comprises comparing 660 performance of the current neural network and the corrected neural network.

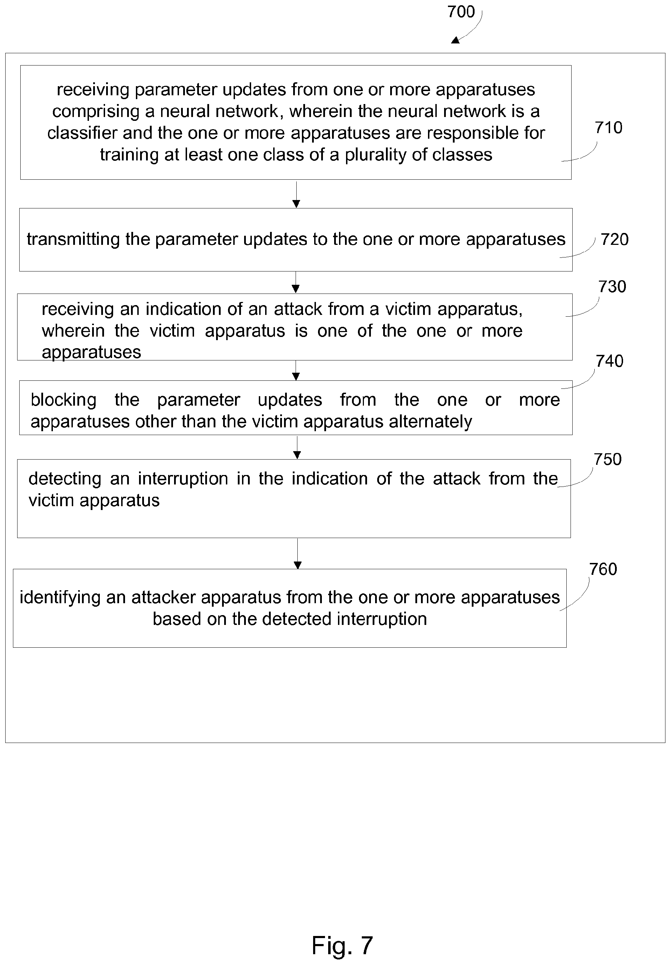

Fig. 7 shows, by way of example, a flowchart of a method 700 for defending against an adversarial attack. The method 700 may be performed by the parameter server. The method 700 comprises receiving 710 parameter updates from one or more apparatuses comprising a neural network, wherein the neural network is a classifier and the one or more apparatuses are responsible for training at least one class of a plurality of classes. The method 700 comprises transmitting 720 the parameter updates to the one or more apparatuses. The method 700 comprises receiving an indication of an attack from a victim apparatus, wherein the victim apparatus is one of the one or more apparatuses 730. The method 700 comprises blocking 740 the parameter updates from the one or more apparatuses other than the victim apparatus alternately. The method 700 comprises detecting 750 an interruption in the indication of the attack from the victim apparatus. The method 700 comprises identifying 760 an attacker apparatus from the one or more apparatuses based on the detected interruption.

The various examples described above may be implemented with the help of computer program code that resides in a memory and causes the relevant apparatuses to carry out the example embodiments. For example, an apparatus may comprise means such as circuitry and electronics for handling, receiving and transmitting data, computer program code in a memory, and a processor that, when running the computer program code, causes the device to carry out the example embodiments.

It is obvious that the present invention is not limited solely to the abovepresented embodiments, but it can be modified within the scope of the appended claims.

## Claims

1. An apparatus (100; 410) comprising a neural network, wherein the neural network comprises a classifier for objects in images and the apparatus is configured to train at least one object class of a plurality of object classes, the apparatus comprising
means for receiving parameters (412) for the neural network (415) from a parameter server (405);
means for updating (417) the parameters of the neural network with the received parameters to obtain a current state of the neural network (420);
means for obtaining image data (422) comprising objects relating to at least said one object class;
means for training the current state of the neural network (425), based on the image data, for the at least one object class;
means for computing first updated parameters (430) based on the training of the current state of the neural network;
means for updating the parameters of the current state of the neural network (435) with the first updated parameters to obtain a first updated state of the neural network (440);
means for training (445) the first updated state of the neural network (440) for one or more classes of the plurality of object classes other than the at least one object class using image data (455) similar to the image data relating to the at least one object class;
means for computing second updated parameters based on the training of the first updated state of the neural network;
means for updating the first updated parameters with the second updated parameters to obtain a second updated state of the neural network (460);
means for comparing performance (465) of the current state of the neural network (435) and the second updated state of the neural network (460);
means for modifying (480) the first updated parameters when the performance of the second updated state of the neural network in classifying objects for the at least one object class is lower (470) than the performance of the current state of the neural network; and
means for transmitting the first modified parameters (490) to a parameter server or to one or more devices being involved in a federated training of a neural network when the performance of the second updated state of the neural network is higher than the performance of the current state of the neural network.

2. The apparatus according to claim 1, wherein the first updated parameters are gradients and/or weights and the modifying the first updated parameters comprises clipping the gradients and/or shrinking the weights.

3. The apparatus according to any of the claims 1 or 2, comprising a data generator trained to generate image data that maximizes a classifier's output probability for the at least one object class, said data generator being configured to generate said image data similar to the image data relating to the at least one object class.

4. The apparatus according to any of the claims 1 to 3, wherein the means are further configured to perform
i) updating the parameters of the first updated state of the neural network with the modified parameters to obtain a modified first state of the neural network;
ii) training the modified first state of the neural network for other object classes of the plurality of object classes than the at least one object class using the image data similar to the image data belonging to the at least one object class;
iii) computing updated modified parameters based on the training of the modified first state of the neural network;
iv) updating the modified parameters with the updated modified parameters to obtain a modified second state of the neural network;
v) comparing performance of the first state of the neural network and the modified second state of the neural network using the image data;
vi) re-modifying the modified parameters when the performance of the second updated state of the neural network is lower than the performance of the first state of the neural network; and
performing i) to vi) until a pre-defined level of performance of the second updated state of the neural network is achieved.

5. A method, comprising
receiving (310), by an apparatus comprising a neural network, parameters for the neural network from a parameter server, wherein the neural network comprises a classifier for objects in images and the apparatus is configured to train at least one object class of a plurality of object classes;
updating (320) the parameters of the neural network with the received parameters to obtain a current state of the neural network;
obtaining image data comprising objects relating to at least said one object class;
training (330) the current state of the neural network, based on the image data, for the at least one object class;
computing (340) first updated parameters based on the training of the current state of the neural network;
updating (350) the parameters of the current state of the neural network with the first updated parameters to obtain a first updated state of the neural network;
training (360) the first updated state of the neural network for one or more classes of the plurality of object classes other than the at least one object class using image data similar to the image data relating to the at least one object class;
computing (370) second updated parameters based on the training of the first updated state of the neural network;
updating (380) the first updated parameters with the second updated parameters to obtain a second updated state of the neural network;
comparing (390) performance of the current state of the neural network and the second updated state of the neural network;
modifying the first updated parameters when the performance of the second updated state of the neural network in classifying objects for the at least one object class is lower than the performance of the current state of the neural network; and
transmitting the first modified parameters to a parameter server or to one or more devices being involved in a federated training of a neural network when the performance of the second updated state of the neural network is higher than the performance of the current state of the neural network.

## Patentansprüche

1. Einrichtung (100; 410), die ein neuronales Netzwerk umfasst, wobei das neuronale Netzwerk einen Klassifizierer für Objekte in Bildern umfasst und die Einrichtung dazu ausgelegt ist, mindestens eine Objektklasse einer Vielzahl von Objektklassen zu trainieren, wobei die Einrichtung Folgendes umfasst
Mittel zum Empfangen von Parametern (412) für das neuronale Netzwerk (415) von einem Parameterserver (405);
Mittel zum Aktualisieren (417) der Parameter des neuronalen Netzwerks mit den empfangenen Parametern, um einen aktuellen Zustand des neuronalen Netzwerks (420) zu erhalten;
Mittel zum Erhalten von Bilddaten (422), die Objekte umfassen, die mindestens die eine Objektklasse betreffen;
Mittel zum Trainieren des aktuellen Zustands des neuronalen Netzwerks (425) auf Basis der Bilddaten für die mindestens eine Objektklasse;
Mittel zum Berechnen von ersten aktualisierten Parametern (430) auf Basis des Trainings des aktuellen Zustands des neuronalen Netzwerks;
Mittel zum Aktualisieren der Parameter des aktuellen Zustands des neuronalen Netzwerks (435) mit den ersten aktualisierten Parametern, um einen ersten aktualisierten Zustand des neuronalen Netzwerks (440) zu erhalten;
Mittel zum Trainieren (445) des ersten aktualisierten Zustands des neuronalen Netzwerks (440) für eine oder mehrere Klassen der Vielzahl von Objektklassen außer der mindestens einen Objektklasse unter Verwendung von Bilddaten (455), die den Bilddaten ähnlich sind, die die mindestens eine Objektklasse betreffen;
Mittel zum Berechnen von zweiten aktualisierten Parametern auf Basis des Trainings des ersten aktualisierten Zustands des neuronalen Netzwerks;
Mittel zum Aktualisieren der ersten aktualisierten Parameter mit den zweiten aktualisierten Parametern, um einen zweiten aktualisierten Zustand des neuronalen Netzwerks (460) zu erhalten;
Mittel zum Vergleichen einer Leistung (465) des aktuellen Zustands des neuronalen Netzwerks (435) und des zweiten aktualisierten Zustands des neuronalen Netzwerks (460);
Mittel zum Modifizieren (480) der ersten aktualisierten Parameter, wenn die Leistung des zweiten aktualisierten Zustands des neuronalen Netzwerks zum Klassifizieren von Objekten für die mindestens eine Objektklasse kleiner (470) ist als die Leistung des aktuellen Zustands des neuronalen Netzwerks; und
Mittel zum Übertragen der ersten modifizierten Parameter (490) zu einem Parameterserver oder zu einer oder mehreren Vorrichtungen, die an einem föderierten Training eines neuronalen Netzwerks beteiligt sind, wenn die Leistung des zweiten aktualisierten Zustands des neuronalen Netzwerks größer ist als die Leistung des aktuellen Zustands des neuronalen Netzwerks.

2. Einrichtung nach Anspruch 1, wobei die ersten aktualisierten Parameter Gradienten und/oder Gewichtungen sind und das Modifizieren der ersten aktualisierten Parameter das Beschneiden der Gradienten und/oder das Schrumpfen der Gewichtungen umfasst.

3. Einrichtung nach einem der Ansprüche 1 oder 2, die einen Datenerzeuger umfasst, der zum Erzeugen von Bilddaten trainiert ist, die eine Ausgabewahrscheinlichkeit eines Klassifizierers für die mindestens eine Objektklasse maximieren, wobei der Datenerzeuger dazu ausgelegt ist, die Bilddaten zu erzeugen, die den die mindestens eine Objektklasse betreffenden Bilddaten ähnlich sind.

4. Einrichtung nach einem der Ansprüche 1 bis 3, wobei die Mittel ferner dazu ausgelegt sind, Folgendes durchzuführen
i) Aktualisieren der Parameter des ersten aktualisierten Zustands des neuronalen Netzwerks mit den modifizierten Parametern, um einen modifizierten ersten Zustand des neuronalen Netzwerks zu erhalten;
ii) Trainieren des modifizierten ersten Zustands des neuronalen Netzwerks für andere Objektklassen der Vielzahl von Objektklassen außer der mindestens einen Objektklasse unter Verwendung der Bilddaten, die den Bilddaten ähnlich sind, die zu der mindestens einen Objektklasse gehören;
iii) Berechnen der aktualisierten modifizierten Parameter auf Basis des Trainings des modifizierten ersten Zustands des neuronalen Netzwerks;
iv) Aktualisieren der modifizierten Parameter mit den aktualisierten modifizierten Parametern, um einen modifizierten zweiten Zustand des neuronalen Netzwerks zu erhalten;
v) Vergleichen einer Leistung des ersten Zustands des neuronalen Netzwerks und des modifizierten zweiten Zustands des neuronalen Netzwerks unter Verwendung der Bilddaten;
vi) erneutes Modifizieren der modifizierten Parameter, wenn die Leistung des zweiten aktuellen Zustands des neuronalen Netzwerks kleiner ist als die Leistung des ersten Zustands des neuronalen Netzwerks; und
Durchführen von i) bis vi), bis ein vordefiniertes Leistungsniveau des zweiten aktualisierten Zustands des neuronalen Netzwerks erreicht ist.

5. Verfahren, das Folgendes umfasst
Empfangen (310) von Parametern für ein neuronales Netzwerk durch eine Einrichtung, die das neuronale Netzwerk umfasst, von einem Parameterserver, wobei das neuronale Netzwerk einen Klassifizierer für Objekte in Bildern umfasst und die Einrichtung dazu ausgelegt ist, mindestens eine Objektklasse einer Vielzahl von Objektklassen zu trainieren;
Aktualisieren (320) der Parameter des neuronalen Netzwerks mit den empfangenen Parametern, um einen aktuellen Zustand des neuronalen Netzwerks zu erhalten;
Erhalten von Bilddaten, die Objekte umfassen, die mindestens die eine Objektklasse betreffen;
Trainieren (330) des aktuellen Zustands des neuronalen Netzwerks auf Basis der Bilddaten für die mindestens eine Objektklasse;
Berechnen (340) von ersten aktualisierten Parametern auf Basis des Trainings des aktuellen Zustands des neuronalen Netzwerks;
Aktualisieren (350) der Parameter des aktuellen Zustands des neuronalen Netzwerks mit den ersten aktualisierten Parametern, um einen ersten aktualisierten Zustand des neuronalen Netzwerks zu erhalten;
Trainieren (360) des ersten aktualisierten Zustands des neuronalen Netzwerks für eine oder mehrere Klassen der Vielzahl von Objektklassen außer der mindestens einen Objektklasse unter Verwendung von Bilddaten, die den Bilddaten ähnlich sind, die die mindestens eine Objektklasse betreffen;
Berechnen (370) von zweiten aktualisierten Parametern auf Basis des Trainings des ersten aktualisierten Zustands des neuronalen Netzwerks;
Aktualisieren (380) der ersten aktualisierten Parameter mit den zweiten aktualisierten Parametern, um einen zweiten aktualisierten Zustand des neuronalen Netzwerks zu erhalten;
Vergleichen (390) einer Leistung des aktuellen Zustands des neuronalen Netzwerks und des zweiten aktualisierten Zustands des neuronalen Netzwerks;
Modifizieren der ersten aktualisierten Parameter, wenn die Leistung des zweiten aktualisierten Zustands des neuronalen Netzwerks zum Klassifizieren von Objekten für die mindestens eine Objektklasse kleiner ist als die Leistung des aktuellen Zustands des neuronalen Netzwerks; und
Übertragen der ersten modifizierten Parameter zu einem Parameterserver oder zu einer oder mehreren Vorrichtungen, die an einem föderierten Training eines neuronalen Netzwerks beteiligt sind, wenn die Leistung des zweiten aktualisierten Zustands des neuronalen Netzwerks größer ist als die Leistung des aktuellen Zustands des neuronalen Netzwerks.

## Revendications

1. Appareil (100 ; 410) comprenant un réseau neuronal, dans lequel le réseau neuronal comprend un classificateur d'objets dans des images, et l'appareil est configuré pour entraîner au moins une classe d'objets d'une pluralité de classes d'objets, l'appareil comprenant
des moyens pour recevoir des paramètres (412) pour le réseau neuronal (415) à partir d'un serveur de paramètres (405) ;
des moyens pour mettre à jour (417) les paramètres du réseau neuronal avec les paramètres reçus pour obtenir un état courant du réseau neuronal (420) ;
des moyens pour obtenir des données d'image (422) comprenant des objets relatifs à ladite au moins une classe d'objets ;
des moyens pour entraîner l'état courant du réseau neuronal (425), sur la base des données d'image, pour l'au moins une classe d'objets ;
des moyens pour calculer des premiers paramètres mis à jour (430) sur la base de l'entraînement de l'état courant du réseau neuronal ;
des moyens pour mettre à jour les paramètres de l'état courant du réseau neuronal (435) avec les premiers paramètres mis à jour pour obtenir un premier état mis à jour du réseau neuronal (440) ;
des moyens pour entraîner (445) le premier état mis à jour du réseau neuronal (440) pour une ou plusieurs classes de la pluralité de classes d'objets autres que l'au moins une classe d'objets en utilisant des données d'image (455) similaires aux données d'image relatives à l'au moins une classe d'objets ;
des moyens pour calculer des deuxièmes paramètres mis à jour sur la base de l'entraînement du premier état mis à jour du réseau neuronal ;
des moyens pour mettre à jour les premiers paramètres mis à jour avec les deuxièmes paramètres mis à jour pour obtenir un deuxième état mis à jour du réseau neuronal (460) ;
des moyens pour comparer la performance (465) de l'état courant du réseau neuronal (435) et du deuxième état mis à jour du réseau neuronal (460) ;
des moyens pour modifier(480) les premiers paramètres mis à jour lorsque la performance du deuxième état mis à jour du réseau neuronal dans la classification des objets pour l'au moins une classe d'objets est inférieure (470) à la performance de l'état courant du réseau neuronal ; et
des moyens pour transmettre les premiers paramètres modifiés (490) à un serveur de paramètres ou à un ou plusieurs dispositifs participant à l'entraînement fédéré d'un réseau neuronal lorsque la performance du deuxième état mis à jour du réseau neuronal est supérieure à la performance de l'état courant du réseau neuronal.

2. Appareil selon la revendication 1, dans lequel les premiers paramètres mis à jour sont des gradients et/ou des poids, et la modification des premiers paramètres mis à jour comprend l'écrêtage des gradients et/ou le rétrécissement des poids.

3. Appareil selon l'une des revendications 1 ou 2, comprenant un générateur de données entraîné pour générer des données d'image qui maximisent une probabilité de sortie du classificateur pour l'au moins une classe d'objets, ledit générateur de données étant configuré pour générer lesdites données d'image similaires aux données d'image relatives à l'au moins une classe d'objets.

4. Appareil selon l'une des revendications 1 à 3, dans lequel les moyens sont en outre configurés pour effectuer les étapes suivantes :
i) mettre à jour des paramètres du premier état mis à jour du réseau neuronal avec les paramètres modifiés pour obtenir un premier état modifié du réseau neuronal ;
ii) entraîner le premier état modifié du réseau neuronal pour d'autres classes d'objets de la pluralité de classes d'objets autres que l'au moins une classe d'objets en utilisant les données d'image similaires aux données d'image appartenant à l'au moins une classe d'objets ;
iii) calculer des paramètres modifiés mis à jour sur la base de l'entraînement du premier état modifié du réseau neuronal ;
iv) mettre à jour des paramètres modifiés avec les paramètres modifiés mis à jour pour obtenir un deuxième état modifié du réseau neuronal ;
v) comparer la performance du premier état du réseau neuronal et du deuxième état modifié du réseau neuronal en utilisant les données d'image ;
vi) remodifier les paramètres modifiés lorsque la performance du deuxième état mis à jour du réseau neuronal est inférieure à la performance du premier état du réseau neuronal ; et
pour effectuer les étapes i) à vi) jusqu'à ce qu'un niveau prédéfini de performance du deuxième état mis à jour du réseau neuronal soit atteint.

5. Procédé, comprenant
la réception (310), par un appareil comprenant un réseau neuronal, de paramètres pour le réseau neuronal à partir d'un serveur de paramètres, dans lequel le réseau neuronal comprend un classificateur d'objets dans des images, et l'appareil est configuré pour entraîner au moins une classe d'objets d'une pluralité de classes d'objets ;
la mise à jour (320) des paramètres du réseau neuronal avec les paramètres reçus pour obtenir un état courant du réseau neuronal ;
l'obtention de données d'image comprenant des objets relatifs à ladite au moins une classe d'objets ;
l'entraînement (330) de l'état courant du réseau neuronal, sur la base des données d'image, pour l'au moins une classe d'objets ;
le calcul (340) de premiers paramètres mis à jour sur la base de l'entraînement de l'état courant du réseau neuronal ;
la mise à jour (350) des paramètres de l'état courant du réseau neuronal avec les premiers paramètres mis à jour pour obtenir un premier état mis à jour du réseau neuronal ;
l'entraînement (360) du premier état mis à jour du réseau neuronal pour une ou plusieurs classes de la pluralité de classes d'objets autres que l'au moins une classe d'objets en utilisant des données d'image similaires aux données d'image relatives à l'au moins une classe d'objets ;
le calcul (370) de deuxièmes paramètres mis à jour sur la base de l'entraînement du premier état mis à jour du réseau neuronal ;
la mise à jour (380) des premiers paramètres mis à jour avec les deuxièmes paramètres mis à jour pour obtenir un deuxième état mis à jour du réseau neuronal ;
la comparaison (390) de la performance de l'état courant du réseau neuronal et du deuxième état mis à jour du réseau neuronal ;
la modification des premiers paramètres mis à jour lorsque la performance du deuxième état mis à jour du réseau neuronal dans la classification des objets pour l'au moins une classe d'objets est inférieure à la performance de l'état courant du réseau neuronal ; et
la transmission des premiers paramètres modifiés à un serveur de paramètres ou à un ou plusieurs dispositifs participant à l'entraînement fédéré d'un réseau neuronal lorsque la performance du deuxième état mis à jour du réseau neuronal est supérieure à la performance de l'état courant du réseau neuronal.
